# EUROPÄISCHE PATENTSCHRIFT

(11) **EP 0 534 184 B1**
(45) Veröffentlichungstag und Bekanntmachung des Hinweises auf die Patenterteilung: **04.01.1995**
(21) Anmeldenummer: 92115035.5
(22) Anmeldetag: 03.09.1992
(51) Int. Cl.: B65H 67/06, D01H 9/18, B65G 47/71

(54) **Transportsystem zum Transport von Einzelträgern**
Transporting system for transporting individual carriers
Système de transport pour transporter des supports individuels

(30) Priorität: 21.09.1991 DE 4131518
(43) Veröffentlichungstag der Anmeldung: 31.03.1993
(73) Patentinhaber: W. SCHLAFHORST AG & CO., D-41061 Mönchengladbach (DE)
(72) Erfinder: Kohlen, Helmut, W-5140 Erkelenz (DE); Surkamp, Paul, W-4152 Kempen (DE); Hensen, Helmuth, W-4050 Mönchengladbach 5 (DE)
(74) Vertreter: Hamann, Arndt, Dipl.-Ing.

(56) Entgegenhaltungen:
- EP-A- 0 374 431
- EP-A- 0 402 703
- EP-A- 0 402 731
- DE-A- 3 919 542

## Beschreibung

Die Erfindung betrifft ein Transportsystem zum Transport von Einzelträgern mit den Merkmalen des Oberbegriffes des ersten Anspruches.

Derartige Transportsysteme, in denen die Einzelträger innerhalb geschlossener Transportschleifen zirkulieren, sind durch eine Vielzahl von Patenten (zum Beispiel JP-A 52-25 139) bekannt. Derartige Transportsysteme weisen auch Transportabschnitte auf, denen eine Verteilfunktion für die Einzelträger zugeordnet ist. Dabei gehen von einer Abzweigung beispielsweise Transportstrecken ab, deren Transportbänder in verschiedene Richtungen transportieren. Zusätzlich müssen dann an den Verzweigungspunkten noch Einrichtungen, wie zum Beispiel Weichen vorhanden sein, um die Einzelträger dem jeweiligen Transportband zuführen zu können.

Weiterer Stand der Technik, bei dem jeweils schaltbare, in den Transportweg schwenkbare Weichen vorgesehen sind, um Einzelträger gesteuert zu verteilen, wird beispielsweise durch die DE-A 39 19 542 und die EP-A-402 731 gebildet.

Es ist des weiteren durch die gattungsbildende EP-A-374 431 bekannt, einen Transportabschnitt zu bilden, dem eine Verteilfunktion für die Einzelträger zugeordnet ist. Dabei wird der Antrieb einer im Transportabschnitt angeordneten bewegten Oberfläche zur Änderung der Bewegungsrichtung der bewegten Oberfläche regelmäßig umgesteuert. Die Verteilfunktion eines derartigen Transportabschnittes beschränkt sich darauf, die Einzelträger willkürlich, je nach Bedarf in von diesem Transportabschnitt abzweigende Transportbahnen zu verteilen.

Es ist Aufgabe der Erfindung, ein Transportsystem mit Verteilfunktion für die Einzelträger zu entwickeln, welches einfach aufgebaut und funktionssicher ist.

Diese Aufgabe wird erfindungsgemäß durch die kennzeichnenden Merkmale des ersten Anspruches gelöst.

Durch die Erfindung ist es möglich, mit Hilfe eines einzigen Transportbandes die Einzelträger an verschiedene, gegebenenfalls auch weiter auseinanderliegende Transportwege zu transportieren oder auch von verschiedenen Transportwegen aus verschiedenen Richtungen an einen dritten Transportweg heranzuführen. Dadurch, daß hierzu nur ein Transportband erforderlich ist, können zum Beispiel ein Antrieb sowie entsprechende Umlenkmittel für Transportbänder eingespart werden. Darüber hinaus ist es auch möglich, schaltbare Weichen zu umgehen.

Die Erfindung ist durch die kennzeichnenden Merkmale der Ansprüche 2 bis 6 vorteilhaft weitergebildet.

Die Ausbildung der ohnehin zum Führen der Einzelträger längs ihres jeweiligen Transportweges erforderlichen Führungsmittel als Fangkontur sowie Zuführkontur gestattet den völligen Verzicht auf in die Transportbahn ragende bewegliche Teile. Im Rahmen der Erfindung ist es möglich, die Fangkonturen sowie die Führungsmittel zum Zuführen der Einzelträger zur jeweiligen Fangkontur in Form und Höhe unterschiedlich auszubilden, wodurch diese entweder auf die Grundplatte oder den gegebenenfalls über dieser angeordneten Sockel wirken. Da Grundplatte und Sockel unterschiedliche Durchmesser besitzen, läßt sich das System gemäß der Erfindung an das jeweilige Transportsystem, inbesondere den Platzbedarf, anpassen.

Alternativ zu einer fest angeordneten Fangkontur mit gegenüberliegender Zuführkontur ist es auch möglich, einen geradlinigen Transportabschnitt vorzusehen, an dem die Fangkontur bildende schwenkbare Hebel angeordnet sind. Da diese Hebel in der gewünschten Transportrichtung gegen die Kraft einer Feder verschwenkbar sind, ist deren zusätzliche Ansteuerung nicht erforderlich. Die Federkraft kann relativ gering sein. Sie muß lediglich ausreichend sein, um nach dem Passieren eines Einzelträgers den Hebel um einen bestimmten Betrag in den Transportweg zurückzuschwenken, der ausreichend ist, um bei Transportrichtungswechsel den Einzelträger gegen einen Teil der Fangkontur laufen zu lassen. In diesem Fall schwenkt der Einzelträger selbst den Hebel bis zum Anschlag zurück, wodurch er dann gestoppt wird.

Die Erfindung ist nachfolgend anhand von Ausführungsbeispielen näher erläutert. In den zugehörigen Zeichnungen zeigen:
- Fig. 1: einen Transportabschnitt für Einzelträger als Draufsicht mit fest geformten Führungsmitteln,
- Fig. 2: eine Variante eines Transportabschnittes, bei dem die Einzelträger aus verschiedenen Richtungen einem gemeinsamen Transportband zuführbar sind und
- Fig. 3: einen Transportabschnitt zum Verteilen der Einzelträger mit an schwenkbaren Hebeln geformten Fangkonturen.

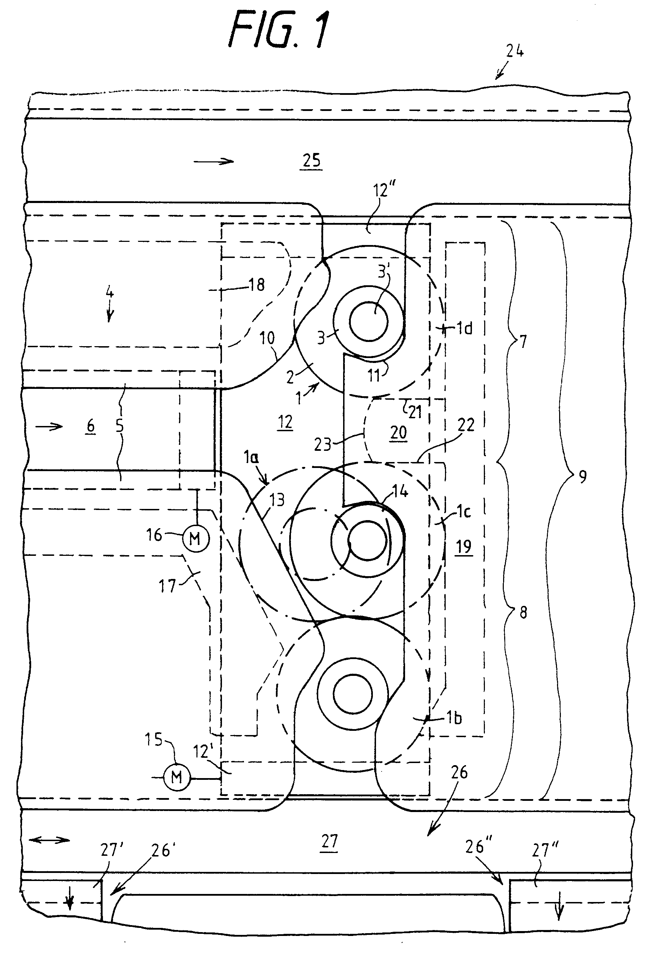

In Fig. 1 ist ein Ausschnitt aus einem Transportsystem für Einzelträger 1 dargestellt. Diese Einzelträger 1 besitzen eine Grundplatte 2, einen Sockel 3 und einen Aufsteckdorn 3'. Aus Übersichtsgründen wurde auf die Darstellung der auf die Aufsteckdorne 3' aufgesteckten Kopse verzichtet.

Dieser Ausschnitt eines Transportsystemes kann im Zuführbereich einer Spulmaschine angeordnet sein, wie er zum Beispiel in der DE 39 19 542 A 1 beschrieben ist. Dabei sind Vorbereitungsstationen für die Kopse in die einzelnen Spulstellenabschnitte integriert. Die Transportbahnen, an denen die Vorbereitungsstationen angeordnet sind, hier dargestellt am Beispiel der Transportbahn 4, laufen parallel zu einer Hauptzuführbahn, hier die Transportbahn 24.

In der Regel ist an der letzten der Vorbereitungsstationen ein Fadendetektor vorgesehen, der erkennt, ob der Fadenanfang erfaßt und gegebenenfalls entsprechend abgelegt worden ist. Hat der Sensor der hier nicht dargestellten Vorbereitungseinrichtung die erfolgreiche Vorbereitung erkannt, muß der den vorbereiteten Kops tragende Einzelträger 1 zu einer Spulstelle transportiert werden. Er ist also zunächst einer entsprechenden Verteilvorrichtung zuzuführen, die die Kopse auf die entsprechenden Reservepositionen der Spulstellen verteilt. Ein derartiges Verteilsystem ist ebenfalls aus der DE 39 19 542 A 1 bekannt. Dieses Verteilsystem ist hier mit dem Bezugszeichen 26 bezeichnet. Entlang der Verteilstrecke ist ein Transportband 27 angeordnet, welches in vorgebbaren Zeitabständen seine Transportrichtung wechselt. Die Reservestrecken für die einzelnen Spulstellen, von denen die Strecke 26' und 26'' dargestellt ist, besitzen ebenfalls Transportbänder 27' und 27'', die in die Transportbahn 26 hineinragen und die Einzelträger 1 den Spulstellen zuführen sollen. Ist eine derartige Reservebahn nicht vollständig besetzt, wird der nächste auf dem Transportband 27 ankommende Einzelträger 1 von dem Transportband 27' beziehungsweise 27'' in die Abzweigbahn 26' beziehungsweise 26'' gezogen.

Hat der an der letzten Kopsvorbereitungsstation an der Transportbahn 4 vorgesehene Detektor keinen erfaßten Faden erkannt, das heißt, war der Kops nicht erfolgreich vorbereitbar, ist die Zuführung dieses Kopses zu einer Spulstelle der Spulmaschine nicht sinnvoll. In diesem Fall kann der Kops mit seinem Einzelträger 1 wieder der Hauptzuführbahn, hier der Transportbahn 24, zugeführt werden, wird dann um das Ende der Spulmaschine herum transportiert und einer speziellen Kopsvorbereitungseinrichtung zugeleitet. Dieser Transportweg nicht vorbereitbarer Kopse ist ebenfalls in der DE 39 19 542 A 1 beschrieben und dargestellt.

Die auf dem von einem Motor 16 angetriebenen Transportband 6 von der Kopsvorbereitungseinrichtung herantransportierten Einzelträger 1 werden entlang dieser Transportbahn 4 durch Führungsplatten 5 geführt und gelangen am Ende der Transportbahn 4 auf ein Transportband 12. Dieses Transportband 12 besitzt eine von einem Motor 15 angetriebene Umlenkrolle 12' und eine weitere am anderen Ende angeordnete Umlenkrolle 12''. Der Motor 15 ist in seiner Antriebsrichtung umsteuerbar. Die Steuerung der Antriebsrichtung erfolgt direkt oder über eine nicht dargestellte Steuereinheit aufgrund der Detektorsignale des Fadendetektors an der Vorbereitungseinrichtung.

Das Transportband 12 verläuft in einem Transportabschnitt 9, der zwischen der Transportbahn 24 und der Transportbahn 26 angeordnet ist. Der Transportabschnitt 9 weist seinerseits zwei Transportabschnitte 7 und 8 auf. Jeder dieser beiden Transportabschnitte 7 und 8 ist für den Transport von Einzelträgern zu einem der beiden Transportbahnen 24 beziehungsweise 26 zuständig.

Hat der an der Vorbereitungseinrichtung angeordnete Sensor eine erfolgreiche Kopsvorbereitung erkannt, wird der Motor 15 so gesteuert, daß das Transportband 12 in Richtung auf die Transportbahn 26 transportiert. Der Einzelträger erreicht zunächst die Position 1a und rollt mit seinem Sockel 3 an der Führungskante 13 ab. Da diese Führungskante 13 nicht parallel zur Transportrichtung des Transportbandes 12, sondern mit einer quer zur Transportrichtung gerichteten Komponente verläuft, wird dabei der Einzelträger zunehmend quer zur Transportrichtung des Transportbandes 12 verschoben. Diese Bewegung kann gleichzeitig durch ein Führungsprofil 17 unterstützt werden, welches an der Grundplatte 2 des Einzelträgers 1 angreift.

Der Einzelträger 1 erreicht dann die Position 1b und steht kurz vor der Zuführung zum Transportband 27. Hat jedoch zu diesem Zeitpunkt der Detektor der Kopsvorbereitungseinrichtung einen nicht vorbereiteten Kops erkannt, schaltet er die Antriebsrichtung des Motors 15 um, wodurch das Transportband 12 in Richtung auf das Transportband 25 transportiert, um den jetzt auf dem Transportband 6 ankommenden, hier jedoch nicht dargestellten Einzelträger 1 der Transportbahn 24 zuzuführen.

Durch diese Transportrichtungsumkehr des Transportbandes 12 wird der Einzelträger, der bereits die Position 1b erreicht hatte, wieder in entgegengesetzter Richtung vom Transportband 12 mitgenommen. Da er aber durch die spezifische Ausbildung der Führungskante 13 seitlich auf dem Transportband 12 verschoben wurde, gerät er jetzt hinter eine Fangkontur 14 in die Position 1c. Auch auf dieser Seite des Transportabschnittes 9 ist ein Führungsprofil 19 angeordnet, welches gegenüber der Einmündung der Transportbahn 4 eine Führungsnase 20 besitzt. Die Stoppkante 22 der Führungsnase 20 bildet zusätzlich zur Fangkontur 14 einen Anschlag für die Grundplatte 2 des Einzelträgers 1 in der Position 1c.

Der vom Transportband 6 herantransportierte Einzelträger 1, der einen nicht vorbereiteten Kops trägt, wird entlang der Führungskante 10 sowie durch das Führungsprofil 18 ebenfalls quer zur Transportrichtung des Transportbandes 12 verschoben. Hat auch dieser Einzelträger 1 das Transportband 25 noch nicht erreicht, wenn die Antriebsrichtung des Motors 15 erneut umgeschaltet wird, wird dieser mit seinem Sockel 3 von einer Fangkontur 11 in einer Position 1d gefangen. Zusätzlich kann auch hier eine Stoppkante 21 der Führungsnase 20 auf die Grundplatte 2 des Einzelträgers wirken.

Eine an der Vorderseite der Führungsnase 20 angeordnete abgerundete Führungskante 23 sorgt zusätzlich dafür, daß vom Transportband 6 herantransportierte Einzelträger 1 in Abhängigkeit von der jeweiligen Transportrichtung des Transportbandes 12 abrollen und sofort die neue erforderliche Transportrichtung einschlagen können.

In diesem Transportabschnitt 9 kann dieses einzige Transportband 12 eine Verteilfunktion für die Einzelträger 1 übernehmen, ohne daß zusätzliche in den Transportweg ragende Schaltmittel erforderlich sind. Die Führung der Einzelträger erfolgt ausschließlich durch entsprechende Formgebung von Führungskanten. Das Transportband 12 kann dabei eine Transportfunktion in unterschiedlichen Richtungen übernehmen. Die Anordnung der Fangkonturen verhindert bei Transportrichtungswechsel den Transport der Einzelträger über den Zuführpunkt hinaus in den anderen Transportabschnitt.

Da die Fangkonturen 11 und 14 vom Einmündungspunkt der Transportbahn 4 beabstandet sind, ist beim nächsten Transportrichtungswechsel der Abstand zur jeweiligen Zielposition entsprechend verringert, wodurch der durch die jeweilige Fangkontur gestoppte Einzelträger seine Zielposition auf dem Transportband 25 beziehungsweise 27 erreicht.

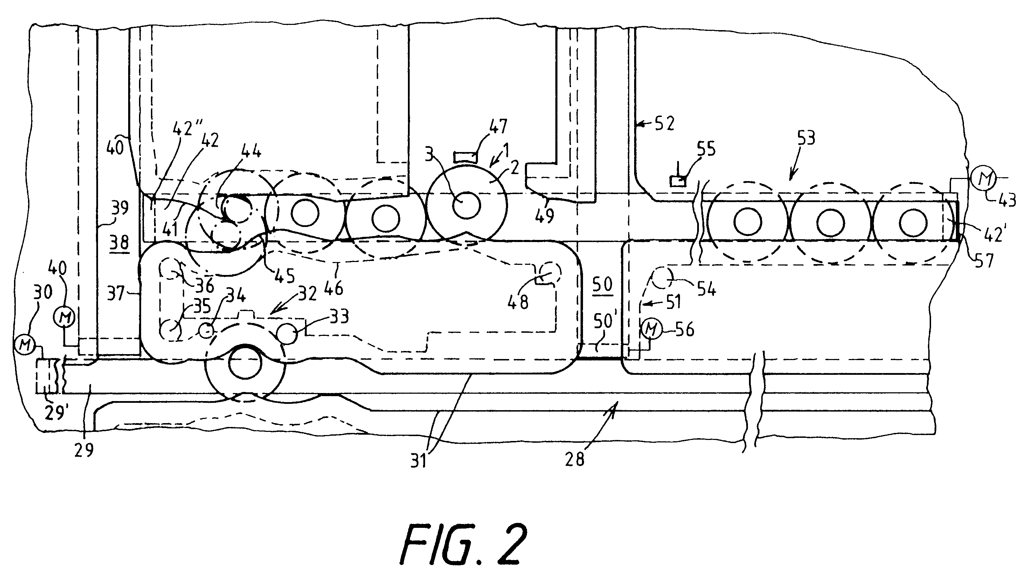

Fig. 2 zeigt die Draufsicht auf einen anderen Transportabschnitt innerhalb des Transportsystemes einer Spulmaschine. Auf der Transportbahn 28 mit Führungsplatten 31 werden auf einem durch einen Motor 30 über eine Umlenkrolle 29' angetriebenen Transportband 29 Einzelträger 1 herantransportiert, die die Spulstellen verlassen haben oder aber, wie weiter oben erwähnt, um die Spulmaschine herum transportiert worden sind, da sie nicht vorbereitet werden konnten.

Diese Einzelträger erreichen einen Restfadendetektor 32, der hier nicht näher dargestellt ist. Ein deartiger Restfadendetektor ist beispielsweise in der Deutschen Patentanmeldung P 41 10 626.1 beschrieben. Hierfür muß der Einzelträger 1 gestoppt werden. Dazu ist ein schaltbarer Elektromagnet 33 vorgesehen, der auf einen am Umfang der Grundplatte 2 des Einzelträgers 1 angebrachten Metallring wirkt. Bei eingeschaltetem Elektromagnet 33 rollt der Einzelträger 1 auf diesem ab und stößt gegen einen Anschlagbolzen 34. Die Führungsplatten 31 weisen eine entsprechende Formgebung auf. In der Position zwischen dem Elektromagneten 33 und dem Anschlagbolzen 34 wird der Einzelträger 1 während der Tätigkeit des Restfadendetektors 32 stabil gehalten. Wird anschließend der Elektromagnet 33 abgeschaltet, wird der Einzelträger 1 durch das Transportband 29 weiter mitgenommen. Er passiert dann einen weiteren Elektromagneten 35, der eingeschaltet wird, wenn der Restfadendetektor 32 einen Fadenrest erkannt hat. Dadurch rollt der Einzelträger 1 auch an diesem Elektromagneten 35 ab und wird auf ein durch einen Motor 40 über eine Umlenkrolle 38' angetriebenes Transportband 38 abgezweigt. Hatte der Restfadendetektor 32 keinen Fadenrest erkannt, wird der Einzelträger 1 auf dem Transportband 29 weitertransportiert und zum Beispiel einer Hülsenabzieheinrichtung zugeführt.

Der Restfadendetektor 32 unterscheidet auch zwischen geringem und größerem Fadenrest. Hat er einen geringeren Fadenrest, dessen Abarbeitung in einer Spulstelle sich nicht mehr lohnt, erkannt, schaltet er auch den Elektromagneten 36 ein, der am Transportband 38 angeordnet ist. Dadurch wird der Einzelträger 1 auf dem Elektromagneten 36 abrollend dem Transportband 42 zugeführt. War hingegen der Fadenrest noch so groß, daß sich eine erneute Zuführung zur Spulmaschine lohnt, beziehungsweise handelte es sich sogar um einen Kops, der noch die volle Bewicklung trägt, aber nicht vorbereitbar war, wird dieser auf dem Transportband 38 entlang der Führungskanten 39 und 40 weitertransportiert und einer speziellen, auf den Kopskegel wirkenden Fadenvorbereitungseinrichtung zugeführt.

Das Transportband 42 wird von einem Motor 43 über eine Umlenkrolle 42' angetrieben und durch eine weitere Umlenkrolle 42'' umgelenkt.

Eine auf der Rückseite einer Fangkontur 44 angeordnete Führungskontur 41 führt zunächst die Einzelträger an ihrem Sockel 3 einer gegenüberliegenden Führungskante 45 zu, die wiederum die Einzelträger in der entgegengesetzten Richtung auf dem Transportband 41 quer zur Transportrichtung verschiebt. Diese Führungskante 45 führt damit die Einzelträger hinter die Fangkontur 44, wodurch diese Einzelträger auch bei Transportrichtungsumkehr des Transportbandes 42 nicht mehr auf die Rückseite der Fangkontur 44 gelangen können. Ein Führungsprofil 46 ist für eine Führung der Einzelträger 1 am Umfang ihrer Grundplatten 2 zusätzlich vorgesehen. Dieses Führungsprofil 46 übernimmt im wesentlichen die Führung der Einzelträger entlang des weiteren Transportabschnittes.

Das Transportband 42 kreuzt ein von einem Motor 56 über eine Umlenkrolle 50' angetriebenes Transportband 50 und verläuft bis in eine Staustrecke 53. Das obere Trum des Transportbandes 42 ist dabei über dem oberen Trum des Transportbandes 50 angeordnet. Der Transportabschnitt zwischen dem Transportband 38 und dem Transportband 50 enthält eine sogenannte Hülsenputzeinrichtung, von der aus Übersichtsgründen hier lediglich eine Positioniereinrichtung 47 schematisch dargestellt ist. Der zwischen dieser Hülsenputzeinrichtung und dem Transportband 38 liegende Teil stellt eine Reservestrecke dar, da es vorkommen kann, daß der Hülsenputzeinrichtung in dichterer Folge zu putzende Hülsen zugeführt werden, als die Hülsenputzeinrichtung verarbeiten kann.

Die Hülsenputzeinrichtung besitzt ebenfalls einen nicht dargestellten Sensor, der nach dem Putzvorgang feststellt, ob Fadenreste auf der Hülse verblieben sind. Hat der Sensor keinen Fadenrest nach dem Putzvorgang detektiert, wird der Elektromagnet 48 eingeschaltet, dem der die geputzte Hülse tragende Einzelträger 1 durch die Gestaltung der Führungskontur 49 zugeführt wird.

Um diesen eingeschalteten Elektromagneten 48 rollt der ankommende Einzelträger durch die Schubkraft des Transportbandes 42 ab und gelangt in den Einflußbereich des Transportbandes 50, welches diesen Einzelträger dann der Transportbahn 28 wieder zuleitet. Dieser Einzelträger 1 gelangt dann erneut zum Restfadendetektor 32, der aufgrund der vom Fadenrest befreiten Hülse den Elektromagneten 35 nicht einschaltet, wodurch der Einzelträger 1 auf dem Transportband 29, wie bereits erwähnt, einer Hülsenabzieheinrichtung zugeführt wird.

Hat der in der Hülsenputzeinrichtung angeordnete Sensor erkannt, daß nach dem Hülsenputzen noch Fadenreste verblieben sind, wird der Elektromagnet 48 nicht zugeschaltet, wodurch der entsprechende Einzelträger 1 auf dem Transportband 42 verbleibt und in die Staustrecke 53 transportiert wird.

Auf der Transportstrecke 52 werden vom Transportband 50 Einzelträger 1 herantransportiert, die auch von der bereits erwähnten Kegelvorbereitungseinrichtung nicht vorbereitet werden konnten. Diese Einzelträger gelangen zwangsläufig auf das Transportband 42 und werden von diesem in die Staustrecke 53 mitgenommen, ohne daß hierzu gesonderte Schaltmittel erforderlich wären.

In die Staustrecke 53 gelangen damit Einzelträger 1 , die nicht erfolgreich gereinigte Spulenhülsen tragen und Einzelträger 1, die automatisch nicht vorbereitbare Kopse tragen. Alle erfordern eine Wartung von Hand.

Solange das Transportband 42 aus Richtung des Transportbandes 38 in die Staustrecke 53 transportiert, werden die Einzelträger gegen einen Anschlag 57 gefahren und gestaut. Ist die Staustrecke angefüllt, was zum Beispiel mit Hilfe eines Sensors 55 erkannt werden kann, wird ein entsprechendes Signal ausgelöst, durch welches die Bedienungsperson herbeigerufen wird. Nachdem dann die Bedienungsperson die Hülsen beziehungsweise Spulen entsprechend gewartet hat, so daß sie automatisch weiterverarbeitbar sind, wird der Motor 43 auf die entgegengesetzte Antriebsrichtung umgeschaltet. Gleichzeitig wird ein Elektromagnet 54 eingeschaltet, wodurch alle aus der Speicherstrecke 53 heraustransportierten Einzelträger 1 um diesen Elektromagneten 54 in die Transportbahn 51 auf das Transportband 50 umgelenkt und der Transportbahn 28 zugeführt werden.

Bei diesem Rückwärtslauf des Transportbandes 42 werden auch die in Reserveposition vor der Hülsenputzeinrichtung wartenden Einzelträger in entgegengesetzter Richtung gefördert. Durch die Fangkontur 44 wird dabei verhindert, daß diese Einzelträger erneut auf das Transportband 38 gelangen, welches sie der Kopskegelvorbereitung zuführen würde, obwohl sie Hülsen tragen, die nur noch einen geringen Fadenrest aufweisen.

Damit sichert auch bei diesem Beispiel bei Umkehr der Transportrichtung des Transportbandes 42 die Fangkontur 44 die vorgesehene Verteilung der Einzelträger 1. Es ist auch offensichtlich, daß die Verwendung eines durchgehenden Transportbandes 42 vom Transportband 38 bis zum Ende der Staustrecke 53 eine wesentliche Vereinfachung des Systemes, der Anzahl der Bänder und Antriebe ermöglicht.

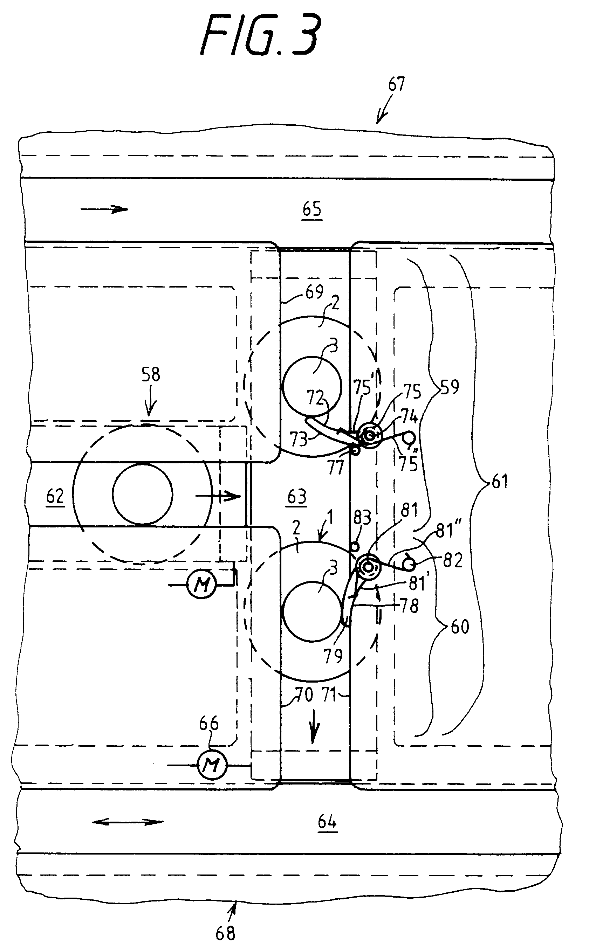

Die in Fig. 3 dargestellte weitere Variante der Erfindung betrifft den gleichen Ausschnitt des Transportsystemes, wie es in Fig. 1 dargestellt ist. Auf dem Transportweg 58 werden mittels eines Transportbandes 62 Einzelträger 1 von den Vorbereitungsstationen einem Transportabschnitt 61 zugeführt, der in zwei Transportabschnitte 59 und 60 aufgeteilt ist. Die Einzelträger sollen dabei alternativ der Transportbahn 67 mit Transportband 65 und der Transportbahn 68 mit Transportband 64 zugeführt werden. Entlang des Transportabschnittes 61 ist ein Transportband 63 angeordnet, welches durch einen Motor 66 in beiden Richtungen antreibbar ist. Führungsplattten 69, 70 und 71 sind hierbei geradlinig ausgebildet und führen die Einzelträger 1 an ihrem jeweiligen Sockel 3.

Die Fangkonturen 72 und 78 sind auf dem Rücken von Hebeln 73 und 79 angeordnet. Die Hebel 73 und 79 sind als einarmige Hebel ausgebildet und um Bolzen 74 beziehungsweise 80 drehbar gelagert. Torsionsfedern 75 und 81, die mit Federschenkeln 75' und 75'' sowie 81' und 81'' gegen die Hebel 72 und 79 wirken und sich gegen Stützstifte 76 und 82 abstützen, verschwenken die beiden Hebel gegen Anschlagbolzen 77 und 83.

Bei der durch Pfeil angegebenen Transportrichtung des Transportbandes 63 in Fig. 3 hält die Fangkontur 72 des Hebels 73 einen Einzelträger 1, der dem Transportband 65 zugeleitet werden soll, zurück. Dabei läßt der Anschlagstift 77 ein weiteres Zurückweichen des Hebels 73 nicht zu. Am Transportabschnitt 60 wird ein Einzelträger vom Transportband 63 in Richtung zum Transportband 64 transportiert und verschwenkt dabei den Hebel 79 gegen die Kraft der Feder 81 aus der Transportbahn. Dieser Hebel 79 mit Fangkontur 78 ist demzufolge in dieser Transportrichtung dem Transport der Einzelträger nicht hinderlich. Zu bemerken ist dabei noch, daß eine sehr geringe Federkraft der Federn 75 und 81 gewählt werden kann, da es bereits ausreichend ist, wenn diese Federn den Hebel 73 beziehungsweise 79 um einen geringen Betrag in die Transportbahn zwischen den Platten 69 beziehungsweise 70 und 71 schwenken. Ein Einzelträger 1, der einen dieser Hebel bereits in der für ihn vorgesehenen Transportrichtung passiert hat, wird bei Transportrichtungsumkehr des Transportbandes 63 diesen Hebel an seiner Fangkontur erfassen und bis gegen den jeweiligen Anschlag 77 beziehungsweise 83 mitnehmen. In dieser Position sperrt dann der jeweilige Hebel mit seiner Fangkontur den Weitertransport des Einzelträgers 1 in analoger Form wie bei den bereits beschriebenen Beispielen mit fest angeordneter Fangkontur.

Da, wie dargestellt, die Federn 75 beziehungsweise 81 eine sehr geringe Federkraft aufweisen, ist auch die Mitnahmekraft des Transportbandes 62 für die Einzelträger 1 groß genug, um diese geringe Federkraft in Transportrichtung überwinden zu können.

## Patentansprüche

1. Transportsystem zum Transport von Einzelträgern (1), die eine Grundplatte (2) und einen Aufsteckdorn (3') für Spulen und Spulenhülsen besitzen, mittels bewegter Oberflächen, auf denen die Einzelträger aufliegen, und mit seitlich angeordneten Führungsmitteln zum Führen der Einzelträger längs ihres jeweiligen Transportweges, sowie wenigstens einem Transportabschnitt, dem eine Verteilfunktion für die Einzelträger zugeordnet ist, wobei der Antrieb (15; 43; 66) der im Transportabschnitt angeordneten bewegten Oberfläche zur Änderung der Bewegungsrichtung der bewegten Oberfläche umsteuerbar ist,
dadurch gekennzeichnet,
daß der Antrieb (15; 43; 66) in Abhängigkeit vom jeweiligen Ziel eines oder mehrerer Einzelträger umsteuerbar ist und daß an den seitlich angeordneten Führungsmitteln wenigstens eine sich quer zur Transportrichtung der bewegten Oberfläche erstreckende Fangkontur (11, 14; 44; 72, 78) vorgesehen und so ausgebildet ist, daß sie in einer Transportrichtung dem Transport der Einzelträger nicht hinderlich ist und in der anderen Transportrichtung ein Stoppen der Einzelträger bewirkt.

2. Transportsystem nach Anspruch 1, dadurch gekennzeichnet, daß die wenigstens eine Fangkontur (11, 14; 44) zum Stoppen der Einzelträger auf einer Seite des Transportabschnittes durch die Führungsmittel selbst gebildet ist und daß die auf der gegenüberliegenden Seite angeordneten Führungsmittel (10, 13; 45) ausgehend vom Einzelträgereintrittspunkt in den Transportabschnitt in Richtung zu einem oder mehreren Einzelträgeraustrittspunkten zum Querverschieben der Einzelträger auf der bewegten Oberfläche zunehmend in den Transportweg eindringend angeordnet sind, um die Einzelträger der Fangkontur zuzuführen.

3. Transportsystem nach Anspruch 1 oder 2, dadurch gekennzeichnet, daß der Transportabschnitt (9; 61) zwischen zwei Transportwegen (24, 26; 67, 68) angeordnet ist, denen die in seinem mittleren Bereich zugeführten Einzelträger in Abhängigkeit von Steuersignalen individuell zugeteilt werden sollen, und daß beidseits des Eintrittspunktes der Einzelträger in den Transportabschnitt Fangkonturen (11, 14; 72, 78) vorgesehen sind.

4. Transportsystem nach Anspruch 2 oder 3, dadurch gekennzeichnet, daß die zunehmend in den Transportweg eindringenden Führungsmittel (17, 18) auf die Grundplatte und die Fangkontur (11, 14) auf einen zwischen Grundplatte und Aufsteckdorn angeordneten Sockel (3) der Einzelträger wirkt.

5. Transportsystem nach Anspruch 2 oder 3, dadurch gekennzeichnet, daß beide gegenüberliegend angeordneten Führungsmittel (10, 13, 11, 14) auf zwischen Grundplatte und Aufsteckdorn angeordnete Sockel (3) der Einzelträger wirken.

6. Transportsystem nach Anspruch 1 , dadurch gekennzeichnet, daß die mindestens eine Fangkontur durch einen in den Transportabschnitt schwenkbaren Hebel (73, 79) gebildet ist, der durch Federkraft gegen einen Anschlag (77, 83) in der Fangstellung gehalten und gegen die Kraft der Feder (75, 81) aus der Fangstellung in der gewünschten Transportrichtung der Einzelträger (1) schwenkbar ist.

## Claims

1. Conveying system for conveying individual supports (1), which comprise a base plate (2) and a stub mandrel (3') for bobbins and bobbin tubes, by means of moving surfaces, on which the individual supports rest, and with guide means arranged laterally for guiding the individual supports along their respective conveying path, as well as at least one conveying section, with which a distribution function for the individual supports is associated, the drive (15; 43; 66) of the moving surface located in the conveying section being reversible for changing the direction of movement of the moving surface, characterised in that the drive (15; 43; 66) is reversible depending on the respective aim of one or more individual supports and that provided on the laterally located guide means is at least one catching contour (11, 14; 44; 72, 78) extending at right angles to the conveying direction of the moving surface and is constructed so that it does not impede the conveyance of the individual supports in one conveying direction and brings about a stoppage of the individual supports in the other conveying direction.

2. Conveying system according to Claim 1, characterised in that at least one catching contour (11, 14; 44) for stopping the individual supports on one side of the conveying section is formed by the guide means themselves and that the guide means (10, 13; 45) located on the opposite side, starting from the individual support entry point into the conveying section in the direction of one or more individual support exit points for the transverse displacement of the individual supports on the moving surface, are arranged to penetrate increasingly in the conveying path, in order to supply the individual supports to the catching contour.

3. Conveying system according to Claim 1 or 2, characterised in that the conveying section (9; 61) is located between two conveying paths (24, 26; 67, 68), to which the individual supports supplied in its central region, depending on control signals, are to be allocated individually and that on both sides of the entry point of the individual supports in the conveying section, catching contours (11, 14; 72, 78) are provided.

4. Conveying system according to Claim 2 or 3, characterised in that the guide means (17, 18) penetrating increasingly in the conveying path act on the base plate and the catching contour (11, 14) acts on a base (3) of the individual supports located between the base plate and the stub mandrel.

5. Conveying system according to Claim 2 or 3, characterised in that both guide means (10, 13, 11, 14) located opposite each other act on bases (3) of the individual supports located between the base plate and the stub mandrel.

6. Conveying system according to Claim 1, characterised in that at least one catching contour is formed by a lever (73, 79) able to tilt into the conveying section, which lever is held by spring force against a stop (77, 83) in the catching position and against the force of the spring (75, 81) is able to tilt out of the catching position in the desired conveying direction of the individual supports (1).

## Revendications

1. Système transporteur pour déplacer des supports individuels (1), ceux-ci comportant une plaque de base (2) et un mandrin à enfoncement (3') destiné à des bobines et à des busettes, au moyen de surfaces mobiles sur lesquelles reposent les supports individuels, ce système comprenant des moyens de guidage disposés latéralement pour guider les supports individuels le long de leur trajet de transport respectif, ainsi qu'au moins une section de transport à laquelle est impartie une fonction de répartition des supports individuels, l'entraînement (15 ; 43 ; 66) de la surface mobile disposée dans la section de transport pouvant être inversé pour modifier la direction de déplacement de la surface mobile, caractérisé par le fait que l'entraînement (15 ; 43 ; 66) peut être inversé en fonction de la destination respective d'un ou plusieurs supports individuels, et par le fait qu'il est prévu sur les moyens de guidage disposés latéralement au moins un contour de retenue (11, 14 ; 44 ; 72, 78) qui s'étend transversalement par rapport à la direction de transport de la surface mobile et qui est conformé d'une manière telle qu'il ne constitue pas un obstacle au transport des supports individuels dans l'une des directions de transport et qu'il produise un blocage des supports individuels (1) dans l'autre direction de transport.

2. Système transporteur selon la revendication 1, caractérisé par le fait que le contour de retenue au moins (11, 14 ; 44) qui est destiné à bloquer les supports individuels est constitué par les moyens de guidage eux-mêmes d'un côté de la section de transport, et par le fait que les moyens de guidage (10, 13 ; 45) qui sont situés du côté opposé sont disposés de manière à faire pénétrer de plus en plus les supports individuels dans le trajet de transport en partant du point où les supports individuels entrent dans la section de transport et dans la direction d'un ou plusieurs points de sortie des supports individuels, en vue de pousser transversalement les supports individuels sur la surface mobile, et afin d'amener les supports individuels vers le contour de retenue.

3. Système transporteur selon la revendication 1 ou 2, caractérisé par le fait que la section de transport (9, 61) est disposée entre deux trajets de transport (24, 26 ; 67, 68) entre lesquels les supports individuels amenés dans sa région centrale doivent être répartis individuellement en fonction de signaux de commande, et par le fait que des contours de retenue (11, 14 ; 72, 78) sont prévus des deux côtés du point où les supports individuels entrent dans la section de transport.

4. Système transporteur selon la revendication 2 ou 3, caractérisé par le fait que les moyens de guidage (17, 18) qui pénètrent de plus en plus dans le trajet de transport agissent sur la plaque de base, et que le contour de retenue (11, 14) agit sur un socle (3) des supports individuels qui est disposé entre la plaque de base et le mandrin à enfoncement.

5. Système transporteur selon la revendication 2 ou 3, caractérisé par le fait que les deux moyens de guidage disposés en face l'un de l'autre (10, 13, 11, 14) agissent sur des socles (3) des supports individuels qui sont disposés entre la plaque de base et le mandrin à enfoncement.

6. Système transporteur selon la revendication 1, caractérisé par le fait que le contour de retenue au moins est constitué par un levier (73, 79) qui peut pivoter dans la direction de transport, qui est maintenu par une force élastique contre une butée (77, 63) dans la position de retenue et qui peut pivoter à l'encontre de la force du ressort (75, 81) depuis la position de retenue jusque dans la direction de transport souhaitée des supports individuels (1).
